# EUROPEAN PATENT APPLICATION

(11) **EP 2 672 373 A1**
(43) Date of publication of application: **11.12.2013**
(21) Application number: 11861644.0
(22) Date of filing: 12.05.2011
(51) Int. Cl.: G06F 3/048, G06F 3/02, G06F 3/042

(54) **METHOD AND DEVICE FOR GENERATING IMAGE KEYBOARD**

(30) Priority: 22.03.2011 CN 201110069239
(71) Applicant: ZTE Corporation, Shenzhen, Guangdong 518057 (CN)
(72) Inventor: ZHANG, Dan, Shenzhen Guangdong 518057 (CN)
(74) Representative: Tischner, Oliver
(86) International application number: PCT/CN2011/073990
(87) International publication number: WO 2012/126193

(57) **Abstract**

The disclosure discloses a method and device for generating an image keyboard, which are applied to the field of communication technologies. The method and the device can both project emitted infrared light beams into the image keyboard and scan the image keyboard, determine whether an infrared radiation change occurs in the key image area of the key position in the image keyboard, output an scanned infrared radiation change information, determine a corresponding key position in the clicked image keyboard according to the infrared radiation change information, and generate a keystroke command electric signal to the corresponding key position. The method and the device provided by the disclosure can solve the problem that a keyboard cannot be manipulated flexibly because the area of the keyboard is affected by the volume of a terminal.

## Description

### TECHNICAL FIELD

The disclosure relates to the field of communication technologies, and in particular to a method and device for generating an image keyboard.

### BACKGROUND

From the history of development of mobile phones, maneuverability and input convenience of the keyboard of a mobile phone are always a bottleneck of the mobile phone to get into real business office, entertainment and leisure, home and travelling. For example, keys are wrongly pressed easily, keys are hard to read due to a small keyboard, and the maneuverability of the mobile phone becomes poor after the mobile phone is applied for a period of time. For above conditions, relevant techniques make the keyboard of the mobile phone larger or make the keyboard in a landscape screen touch mode to enlarge manipulating space of users, thereby enhancing comfort of manipulation.

The above methods are helpful for the users to some extent, but have the following disadvantages: firstly, enlargement of the operation keyboard of a mobile phone will certainly cause increase in volume and weight of the mobile phone, thereby causing inconvenience to use of the users and flexible movement; secondly, when a conventional physical keyboard is applied to quickly implement fast interactive operation, such as business office, online games and the like, the user has to hold the mobile phone in one hand and perform operations in the other hand, so that the operation is very inconvenient.

### SUMMARY

The main purpose of the disclosure provides a method and device for generating an image keyboard, which are used to solve the problem that a keyboard cannot be manipulated flexibly because the area of the keyboard is affected by the volume of a terminal.

In order to solve the above problem, the technical solution of the disclosure is realized as follows.

A device for generating an image keyboard, which includes:
an infrared projection source module, which is configured to project emitted infrared light beams into the image keyboard;
an image keyboard control module, which is configured to scan the image keyboard, determine whether an infrared radiation change occurs in the key image areas of the key position in the image keyboard, and output an scanned infrared radiation change information; and
a conversion module, which is configured to determine a corresponding key position in the clicked image keyboard according to the infrared radiation change information output by the image keyboard control module, and generate a keystroke command electric signal to the corresponding key position.

The image keyboard control module may include:
an infrared camera unit, which is configured to select the range of the key image area of the key position and an basic infrared information of an operated object from an image area of the image keyboard; and
an infrared information acquisition unit, which is configured to scan the image area of the image keyboard, determine whether an infrared radiation change occurs in the key image area according to the basic infrared information of the operated object, when the change occurs, store the infrared radiation change information in a date register.

The device may further include:
an image keyboard appearance adjusting module, which is configured to adjust at least one of the interface, size and shape of the image of the image keyboard according to an input image keyboard adjusting information.

The conversion module may be further configured to match the keystroke command electric signal with a preset Identifier (ID) of an event processing message of a key position interrupting module, and determine an input operation information according to a matching result.

The conversion module may be further configured to:
determine the time difference between two continuous clicks in the same key image area, when the time difference is smaller than a preset threshold, determine as a double-click action, and when the time difference is greater than the preset threshold, determine as two continuous single-click actions; and
when infrared rays continuously emitted by the operating object in the process of sliding in the image area of the image keyboard produce a continue temperature difference with a background area, determine as a sliding event action.

A method for generating an image keyboard, which includes:
projects emitted infrared light beams into the image keyboard and scans the image keyboard, determines whether an infrared radiation change occurs in the key image area of the key position in the image keyboard, and outputs an scanned infrared radiation change information; and
determines a corresponding key position in the clicked image keyboard according to the infrared radiation change information, and generates a keystroke command electric signal to the corresponding key position.

The process of scanning the image keyboard, determining whether an infrared radiation change occurs in the key image area of the key position in the image keyboard, and outputting the scanned infrared radiation change information may include:
selecting the range of the key image area of the key position and an basic infrared information of an operated object from an image area of the image keyboard; and scanning the image area of the image keyboard, determining whether an infrared radiation change occurs in the key image area according to the basic infrared information of the operated object, when the change occurs, storing the infrared radiation change information in a date register.

After projecting the image keyboard, the method may further include:
adjusting at least one of the interface, size and shape of the image of the image keyboard according to an input image keyboard adjusting information.

After generating the keystroke command electric signal to the corresponding key position, the method may further include: matching the keystroke command electric signal with a preset ID of an event processing message of a key position interrupting module, and determining an operation information input by a user according to a matching result.

After determining the corresponding key position in the clicked image keyboard, the method may further include:
determining the time difference between two continuous clicks in the same key image area, when the time difference is smaller than a preset threshold, determining as a double-click action, and when the time difference is greater than the preset threshold, determining as two continuous single-click actions; and
when infrared rays continuously emitted by the operating object in the process of sliding in the image area of the image keyboard produce a continue temperature difference with a background area, determining as a sliding event action.

A mobile terminal includes a terminal body having a communication function, and further includes:
the device for generating an image keyboard.

In the method and the device provided by embodiments of the disclosure, the infrared light beam emitted by the device with infrared projection source can be projected into the image keyboard. The image keyboard can be easily and expediently projected on a surface of a smooth object, such as a table and the like, so that an infrared signal released by an action of an operator is converted into a keystroke command and transmitted to a terminal, so as to break away from the constraint of the physical keyboard of the mobile phone preliminarily.

### BRIEF DESCRIPTION OF THE DRAWINGS

Fig. 1 is a flowchart of a method for generating an image keyboard according to an embodiment of the disclosure;
Fig. 2 is a structural diagram of a device for generating an image keyboard according to an embodiment of the disclosure; and
Fig. 3 is a structural diagram of an image keyboard control module according to an embodiment of the disclosure.

### DETAILED DESCRIPTION

Embodiments of the disclosure provide a method for expanding a terminal keyboard, which includes: activating an infrared projection source, forming an image keyboard by using projected infrared light beams; scanning the image keyboard, determining whether an infrared radiation change occurs in the key image area of each key position in the image keyboard, and outputting scanned infrared radiation change information; and determining a corresponding key position in the image keyboard clicked by a user according to the infrared radiation change information, and generating a keystroke command electric signal to the corresponding key position.

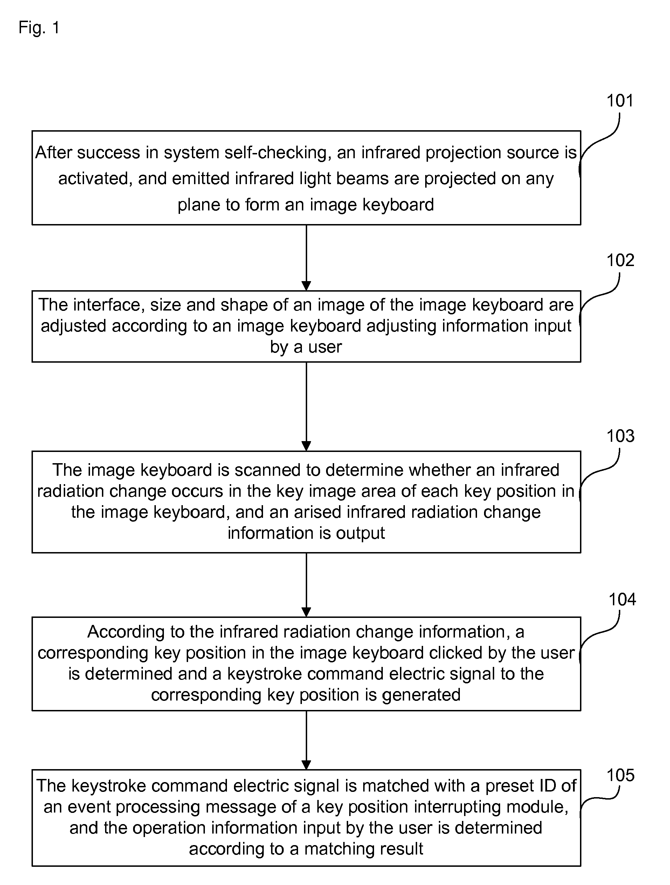

As shown in Fig. 1, an embodiment of the disclosure provides a method for expanding a terminal keyboard, which includes the specific realization steps:
Step 101: after success in system self-checking, an infrared projection source is activated, and emitted infrared light beams are projected on any plane to form an image keyboard.

Projects of the self-checking include: checking whether a projection system, an infrared camera system, a signal conversion and processing system and other systems work normally, and detecting whether contents of a data register are emptied completely. The emptying action is performed when an infrared keyboard function is initiated each time.

Because the size and colour of a plane bearing the image keyboard will both have an impact on identification of the image keyboard, it needs to perform corresponding adjustment on the image keyboard according to correlative factors of the plane. Therefore, the embodiment of the disclosure further includes:
Step 102: the interface, size and shape of an image of the image keyboard are adjusted according to an image keyboard adjusting information input by a user.
Step 103: the image keyboard is scanned to determine whether an infrared radiation change occurs in the key image area of each key position in the image keyboard, and an scanned infrared radiation change information is output.

In order to determine more accurately whether the user performs an operation on the image keyboard, monitoring and statistics are performed on the infrared information in a key position range of a projected key and the infrared information of finger and skin of the user after it is determined that the finger of the user enters into the infrared key image area.
Step 104: according to the infrared radiation change information, a corresponding key position in the image keyboard clicked by the user is determined and a keystroke command electric signal to the corresponding key position is generated.

According to the infrared information recorded in Step 103 (the temperatures of key image area that each key position corresponds to are respectively recorded as T1, T2, ..., and Tn, and an infrared information temperature of the finger and skin of the user is recorded as T0), when the finger of the user clicks on different key positions of the key image area, it can be determined whether the user performs an operation on the key image area according to a temperature difference Tn-T0= δ T. According to sensitivity of an existing infrared detector, it is completely feasible to determine that there is a keystroke action when a temperature difference arises.
Step 105: the keystroke command electric signal is matched with a preset ID of an event processing message of a key position interrupting module, and the operation information input by the user is determined according to a matching result.

In an embodiment of the disclosure, in order to implement identification of double-click and sliding operations, after determining the corresponding key position in the image keyboard clicked by the user, further includes:
determining the time difference between two continuous clicks in the same key image area, when the time difference is smaller than a preset threshold, determining as a double-click action, and when the time difference is greater than the preset threshold, determining as two continuous single-click actions; and
when infrared rays continuously emitted by the operating object in the process of sliding in the image area of the image keyboard produce a continue temperature difference with a background area, determining as a sliding event action.

Furthermore, the image keyboard of an embodiment of the disclosure further includes a virtual infrared roll mouse area, if the user performs a sliding operation in the virtual infrared roll mouse area, then a location operation to a mouse can be implemented.

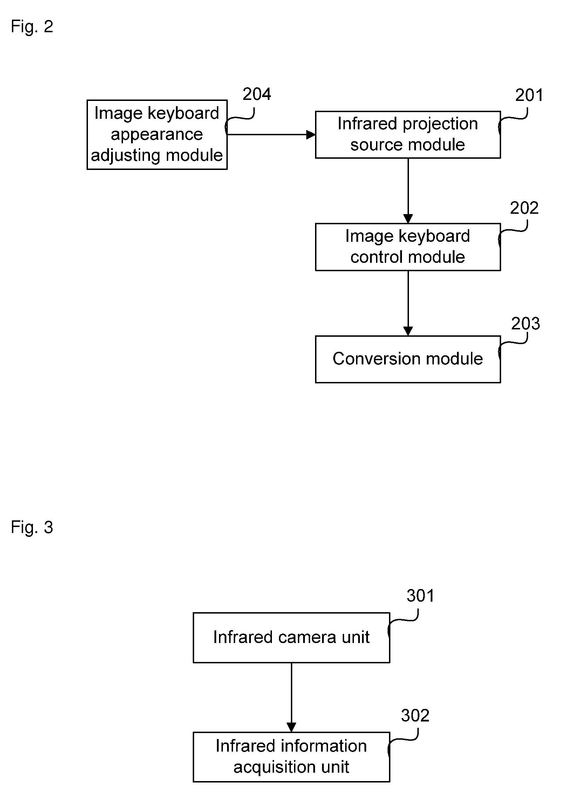

As shown in Fig. 2, an embodiment of the disclosure further provides a device for expanding a terminal keyboard. The device includes an infrared projection source module 201, an image keyboard control module 202 and a conversion module 203, wherein
the infrared projection source module 201 is configured to project emitted infrared light beams into an image keyboard on any plane;
the image keyboard control module 202 is configured to scan the image keyboard, determine whether an infrared radiation change in the key image area of each key position in the image keyboard, and output scanned infrared radiation change information; and
the conversion module 203 is configured to determine a corresponding key position in the image keyboard clicked by a user according to the infrared radiation change information output by the image keyboard control module, and generate a keystroke command electric signal to the corresponding key position.

Because the size and colour of a bearing plane will both have an impact on identification of the image keyboard, it needs to perform corresponding adjustment on the image keyboard according to correlative factors of the bearing plane. Therefore, the device of the embodiment of the disclosure further includes:
an image keyboard appearance adjusting module 204, which is configured to adjust the interface, size and shape of an image of the image keyboard according to an image keyboard adjusting information input by a user.

In order to implement a corresponding connection between the image keyboard module and a terminal, the conversion module of the device is further configured to match the keystroke command electric signal with a preset ID of an event processing message of a key position interrupting module, and determine the operation information input by the user according to a matching result.

As shown in Fig. 3, the image keyboard control module 202 includes:
an infrared camera unit 301, which is configured to select the range of the key image area of each key position and basic infrared information of an operated object from an image area of the image keyboard; and
an infrared information acquisition unit 302, which is configured to scan the image area of the image keyboard, determine whether an infrared radiation change occurs in the key image area according to the basic infrared information of the operated object, when the change occurs, store the infrared radiation change information in a date register.

In order to implement single-click and sliding operations, the conversion module 203 is further configured to determine the time difference between two continuous clicks in the same key image area, when the time difference is smaller than a preset threshold, determine as a double-click action, and when the time difference is greater than the preset threshold, determine as two continuous single-click actions; and can further determine a sliding event action through the continue temperature difference arised between infrared background area and continuously emitted infrared rays in the process that the operating object slides in the image area of the image keyboard.

An embodiment of the disclosure further provides a mobile terminal, which includes a terminal body having a communication function, and further includes the device for generating an image keyboard above-mentioned.

In the method and the device provided by the embodiments of the disclosure, the infrared light beam emitted by the device with infrared projection source can be projected into the image keyboard. The image keyboard can be easily and expediently projected on a surface of a smooth object, such as a table and the like, so that an infrared signal released by an action of an operator is converted into a keystroke command and transmitted to a terminal, so as to break away from the constraint of the physical keyboard of the mobile phone preliminarily.

In an actual application, visible light can be irradiated on a desktop obliquely, and the interface, size and shape of a keyboard image can be adjusted in combination with the colour of the desktop.

Further, an infrared detection system can be included. Since illumination intensity of the virtual key image emitted by a projection system is larger than adjacent non-projection areas, therefore an infrared information is merely limited in the lighting area, by which an infrared collection range can be selected accurately. On the other hand, the position of a keystroke point can be determined according to the temperature difference caused by nails and surrounding skin components.

Further, a signal conversion system can be included. When a finger clicks the key image area of the desktop and after the infrared detection system determines the position of the keystroke point, the signal conversion system converts an infrared signal into an electric signal, and thereby forms a control command of the user.

As can be seen, in the method and the device provided by the embodiments of the disclosure, the infrared light beam emitted by the device with infrared projection source can be projected into the image keyboard. The image keyboard can be easily and expediently projected on a surface of a smooth object, such as a table and the like, so that an infrared signal released by an action of an operator is converted into a keystroke command and transmitted to a terminal, so as to break away from the constraint of the physical keyboard of the mobile phone preliminarily.

Obviously, those skilled in the art can make various modifications and variations to the disclosure without departing from the spirit and scope of the disclosure. Thus, if these modifications and variations of the disclosure fall within the scope of the claims of the disclosure and equivalent technologies thereof, the disclosure is also intended to include these modifications and variations.

## Claims

1. A device for generating an image keyboard, comprising:
an infrared projection source module, which is configured to project emitted infrared light beams into the image keyboard;
an image keyboard control module, which is configured to scan the image keyboard, determine whether an infrared radiation change occurs in the key image area of the key position in the image keyboard, and output an scanned infrared radiation change information; and
a conversion module, which is configured to determine a corresponding key position in the clicked image keyboard according to the infrared radiation change information output by the image keyboard control module, and generate a keystroke command electric signal to the corresponding key position.

2. The device according to claim 1, wherein the image keyboard control module comprises:
an infrared camera unit, which is configured to select the range of the key image area of the key position and an basic infrared information of an operated object from an image area of the image keyboard; and
an infrared information acquisition unit, which is configured to scan the image area of the image keyboard, determine whether an infrared radiation change occurs in the key image area according to the basic infrared information of the operated object, when the change occurs, store the infrared radiation change information in a date register.

3. The device according to claim 1, further comprising:
an image keyboard appearance adjusting module, which is configured to adjust at least one of the interface, size and shape of the image of the image keyboard according to an input image keyboard adjusting information.

4. The device according to any one of claims 1-3, wherein the conversion module is further configured to match the keystroke command electric signal with a preset Identifier (ID) of an event processing message of a key position interrupting module, and determine an input operation information according to a matching result.

5. The device according to any one of claims 1-3, wherein the conversion module is further configured to:
determine the time difference between two continuous clicks in the same key image area, when the time difference is smaller than a preset threshold, determine as a double-click action, and when the time difference is greater than the preset threshold, determine as two continuous single-click actions; and
when infrared rays continuously emitted by the operating object in the process of sliding in the image area of the image keyboard produce a continue temperature difference with a background area, determine as a sliding event action.

6. A method for generating an image keyboard, comprising:
projecting emitted infrared light beams into the image keyboard and scanning the image keyboard, determining whether an infrared radiation change occurs in the key image area of the key position in the image keyboard, and outputting an scanned infrared radiation change information; and
determining a corresponding key position in the clicked image keyboard according to the infrared radiation change information, and generating a keystroke command electric signal to the corresponding key position.

7. The method according to claim 6, the process of scanning the image keyboard, determining whether an infrared radiation change occurs in the key image area of the key position in the image keyboard, and outputting the scanned infrared radiation change information comprises:
selecting the range of the key image area of the key position and an basic infrared information of an operated object from an image area of the image keyboard; and scanning the image area of the image keyboard, determining whether an infrared radiation change occurs in the key image area according to the basic infrared information of the operated object, when the change occurs, storing the infrared radiation change information in a date register.

8. The method according to claim 6, wherein after projecting the image keyboard, further comprising:
adjusting at least one of the interface, size and shape of the image of the image keyboard according to an input image keyboard adjusting information.

9. The method according to any one of claims 6-8, wherein after generating the keystroke command electric signal to the corresponding key position, further comprising: matching the keystroke command electric signal with a preset Identifier (ID) of an event processing message of a key position interrupting module, and determining an operation information input by a user according to a matching result.

10. The method according to any one of claims 6-8, wherein after determining the corresponding key position in the clicked image keyboard, further comprising:
determining the time difference between two continuous clicks in the same key image area, when the time difference is smaller than a preset threshold, determining as a double-click action, and when the time difference is greater than the preset threshold, determining as two continuous single-click actions; and
when infrared rays continuously emitted by the operating object in the process of sliding in the image area of the image keyboard produce a continue temperature difference with a background area, determining as a sliding event action.

11. A mobile terminal comprising a terminal body having a communication function, further comprising:
the device for generating an image keyboard according to any one of claims 1-5.
